# EUROPÄISCHE PATENTANMELDUNG

(11) **EP 1 783 027 A2**
(43) Veröffentlichungstag der Anmeldung: **09.05.2007**
(21) Anmeldenummer: 06022916.8
(22) Anmeldetag: 03.11.2006
(51) Int. Cl.: B62B 5/02

(54) **Transportvorrichtung**

(30) Priorität: 04.11.2005 DE 102005053426
(71) Anmelder: Schwarzwälder Marketing GmbH & Co., 78112 St. Georgen (DE); Obergfell, Carsten, 78144 Tennenbronn (DE); Obergfell, Manfred, 78144 Tennenbronn (DE)
(72) Erfinder: Obergfell, Manfred, 78144 Tennenbronn (DE)
(74) Vertreter: Patentanwälte Ruff, Wilhelm, Beier, Dauster & Partner

(57) **Zusammenfassung**

Bei einer Sackkarre oder einer Handkarre mit einem Haltemittel (14) aufweisenden Gestell (12) und einer wenigstens zwei Räder (18) aufweisenden Fortbewegungs-Vorrichtung (16) ist die Fortbewegungs-Vorrichtung (18) im unteren Endbereich (22) des Gestells (12) angeordnet und so ausgebildet, dass Räder (18, 42) jeweils paarweise an gegenüberliegenden Seiten des Gestells (12) am Gestell (12) angeordnet sind. Die Fortbewegungs-Vorrichtung (16) ist als ein Raupenlaufwerk (20) ausgebildet, das eine umlaufende Laufband-, Ketten- und/oder Riemen-Anordnung aufweist, die am Gestell (12) von einer Transportposition in eine Lagerposition geschwenkt werden kann.

## Beschreibung

### Anwendungsgebiet und Stand der Technik

Die Erfindung betrifft eine Transportvorrichtung, insbesondere Sackkarre oder Handkarren, mit einem wenigstens ein Haltemittel aufweisenden Gestell und einer wenigstens zwei Räder aufweisenden Fortbewegungs-Vorrichtung. Dabei ist die Fortbewegungs-Vorrichtung im unteren Endbereich des Gestells angeordnet und so ausgebildet, dass Räder jeweils paarweise an gegenüberliegenden Seiten des Gestells am Gestell angeordnet sind.

Transportvorrichtungen dieser Art sind beispielsweise aus der DE 299 09 757 U1 bekannt. Die Transportvorrichtung weist mit Handgriffen versehene und einen Rahmen bildende Hebel sowie eine Ladeplatte zur Aufnahme einer Last auf. Weiterhin sind an der Transportvorrichtung im unteren Endbereich des Rahmens je Rahmenseite drei Räder an einem Halter angeordnet, wobei der Halter um eine zentrale Drehachse beliebig drehbar gelagert ist. Mittels dieser Transportvorrichtung können Lasten stabil auf weistestgehend ebenen Flächen transportiert werden, da immer wenigstens zwei Räder pro Rahmenseite Bodenkontakt haben. Auch das Verhalten der Transportvorrichtung beim Bewegen von Lasten über Treppen ist verbessert, da die Räderanordnungen über die Stufenkanten abrollen und so nur noch ein geringes Maß an Stöße auf das Transportgut bzw. die transportierende Person überträgt. Es wird jedoch auch weiterhin eine vergleichsweise große Kraft benötigt, um die Transportvorrichtung über eine Stufenkante treppauf zu ziehen oder treppab zu führen, da der senkrecht ausgerichtete Anteil der Stufe überwunden werden muss. Es gibt auch Treppen mit unterschiedlich hohen Stufen, so dass mit dieser Transportvorrichtung lediglich Lasten an einer Treppenart mit einer bestimmten Stufenhöhe erschütterungsarm und mit relativ geringem Kraftaufwand transportiert werden können.

### Aufgabe und Lösung

Aufgabe der Erfindung ist es, eine eingangs genannte Transportvorrichtung zu schaffen, die einen Transport von Lasten über Treppen im Wesentlichen erschütterungsfrei und sowohl gleichmäßig als auch mit geringem Kraftaufwand erlaubt.

Gelöst wird diese Aufgabe durch eine Vorrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Manche der nachfolgenden, jedoch nicht erschöpfend aufgezählten Merkmale und Eigenschaften werden teilweise nur einmal beschrieben, gelten jedoch unabhängig voneinander für alle Ansprüche. Weiterhin ist die Reihenfolge der aufgelisteten Merkmale nicht bindend, sondern kann vielmehr entsprechend einer optimierten Vorrichtung geändert werden.

Erfindungsgemäß ist die Fortbewegungs-Vorrichtung als wenigstens ein Raupenlaufwerk ausgebildet, das eine umlaufende Laufband-, Ketten- und/oder Riemen-Anordnung aufweist, die am Gestell von einer Transportposition in eine Lagerposition überführbar ist.

Als Transportvorrichtung werden hier Vorrichtungen verstanden, die zum vorzugsweise manuellen Transport von sperrigen und/oder vergleichsweise schweren Gegenständen durch eine Person verwendet werden beziehungsweise den manuellen Transport von Gegenständen im Allgemeinen vereinfachen. Die Transportvorrichtung kann beispielsweise als so genannte Sackkarre ausgebildet sein, aber auch jede andere Ausgestaltung aufweisen, mit der Gegenstände der genannten Art auf genannte Weise transportiert werden können.

Die Haltemittel der Transportvorrichtung können als Auflagefläche ausgebildet sein, die beispielsweise fest, klappbar und/oder schwenkbar mit dem Gestell verbunden ist. Die Haltemittel können jedoch auch hakenartig, ösenartig oder in jeder anderen sinnvollen Art ausgebildet sein, alternativ auch als Gurte oder Gummispanner. Sie sind vorzugsweise im unteren Endbereich angeordnet, also in dem Bereich der Transportvorrichtung, der der Fortbewegungsebene zugewandt ist. Es können jedoch auch mehrere Haltemittel am Gestell der Transportvorrichtung angeordnet sein, die wie auch schon die einzelnen Haltemittel über den gesamten Verlauf des Gestells verteilt angeordnet sein können. Weiterhin können die Haltemittel demontierbar sein, so dass sie variabel am Gestell angeordnet werden können.

Das Gestell der Transportvorrichtung ist vorzugsweise als Rohrkonstruktion ausgebildet, die aus gebogenen Rohren besteht, um beispielsweise eine stabile und ergonomische Anordnung zu erhalten. Es ist auch denkbar, das Gestell aus andersartigen Teilen zu gestalten, beispielsweise aus Mehrkantmaterial. Da das Gestell auch als Hebel zum Anheben der zu transportierenden Last mittels Rotation der Transportvorrichtung um eine Achse der Fortbewegungs-Vorrichtung herangezogen wird, ist es vorteilhaft, das Material für das Gestell entsprechend stabil dimensioniert zu wählen.

Das Laufband der Laufband-, Ketten- und/oder Riemen-Anordnung kann beispielsweise als Lederband, Kunststoffband oder dergleichen ausgebildet sein. Eine Kette kann als Gliederkette oder als Aneinanderreihung von schwenkbar miteinander verbundenen Plättchen oder dergleichen ausgebildet sein, beispielsweise Metall und/oder Kunststoffplättchen. Ein Riemen kann beispielsweise als Zahnriemen, Keilriemen oder dergleichen ausgebildet sein. Vorteilhaft ist das Laufband, die Kette und/oder der Riemen so beschaffen, dass sie Antirutscheigenschaften aufweisen. Weiterhin kann vorteilhaft vorgesehen sein, die Laufband-, Ketten- und/oder Riemen-Anordnung mit einer Art Kletterhilfe zu versehen. Diese Kletterhilfen können beispielsweise so ausgebildet sein, dass an ihnen Ausnehmungen vorgesehen sind, die die Treppenstufenkanten hintergreifen, so dass die Transportvorrichtung zusätzlich gegen Abrutschen gesichert ist, also beispielsweise als gezackte Oberfläche.

Die Räder der Transportvorrichtung können beispielsweise als Luftreifen, als Vollgummireifen odgl. ausgebildet sein. Sie können jedoch auch bereits Teil des Raupenlaufwerks sein, so dass eine Ausbildung der Räder als Scheibenrad beispielsweise mit einer umlaufenden Nut zur Führung des Laufbands, der Kette und/oder des Riemens vorteilhaft ist. Die Anordnung der Räder an gegenüberliegenden Seiten des Gestells erhöht die Stabilität der Transportvorrichtung bei der Fortbewegung wie auch im Stand. Vorteilhaft ist ihr Durchmesser größer als die Höhe des Raupenlaufwerks.
Das Raupenlaufwerk ist vorzugsweise im Wesentlichen breit und länglich ausgebildet und weist wenigstens eine Laufflächenseite auf, mit der das Raupenlaufwerk auf der Ebene aufliegt, auf der die Transportvorrichtung fortbewegt wird. Durch die Ausgestaltung der Fortbewegungs-Vorrichtung nach Art eines länglichen Raupenlaufwerks kann die Transportvorrichtung im Wesentlichen erschütterungsfrei und mit gleichmäßigem und geringem Kraftaufwand über eine Treppe, eine Rampe oder dergleichen bewegt werden. Dazu kann das Raupenlaufwerk in seiner Transportposition auf Treppenstufenkanten aufgesetzt werden, wodurch es eine Art Rampe bildet. Die Transportvorrichtung muss also nicht mehr über die senkrecht ausgerichteten Treppenstufenflanken und waagrecht ausgerichteten Treppenstufentrittflächen gezogen oder geführt werden. Das Raupenlaufwerk ist dabei vorzugsweise so ausgebildet, dass es wenigstens den Abstand zwischen zwei, vorteilhaft zwischen drei oder vier Treppenstufenkanten vollständig überspannt.

Durch die Überführbarkeit des Raupenlaufwerks von einer Transportposition in eine Lagerposition kann die Transportvorrichtung auch wie herkömmliche Transportvorrichtungen auf einer im Wesentlichen ebenen Fläche im Wesentlichen ohne Steigung verwendet werden. Es versteht sich dabei von selbst, dass das Raupenlaufwerk auch von der Lagerposition in die Transportposition überführbar ist. Die Lagerposition zeichnet sich dadurch aus, dass das Raupenlaufwerk in einem Bereich der Transportvorrichtung angeordnet ist, in dem sie zwar - je nach Ausführung - den Boden berühren kann, jedoch nicht in einen Bereich ragt, in den sich der Bewegungsablauf von Beinen einer Bedienperson erstreckt.

In der Transportposition des Raupenlaufwerks ist dieses so an der Transportvorrichtung angeordnet, dass es wenigstens ab einer bestimmten Winkellage der Transportvorrichtung zur Fortbewegungsebene die Fortbewegungsebene berührt, beziehungsweise aufliegt.
In einer Ausgestaltung der Erfindung kann das Raupenlaufwerk mittels einer Schwenkbewegung von der Transportposition in die Lagerposition überführt werden, vorzugsweise nur mittels Schwenken. Das Raupenlaufwerk kann aber beispielsweise auch eingeklappt, eingedreht, versetzt und/oder dergleichen werden.

In einer Ausgestaltung der Erfindung ist das Raupenlaufwerk in der Transportposition und/oder der Lagerposition arretierbar. Die Arretierung kann beispielsweise mittels einer Schraubverbindung, mittels Klemmen, einem Kniegelenk, einer Gasfeder und/oder dergleichen realisiert sein. Durch die Arretierung kann vorteilhaft gewährleistet werden, dass sich das Raupenlaufwerk nicht unbeabsichtigt von der Lagerposition in die Transportposition bewegt, beispielsweise durch Rüttelbewegungen ausgelöst. Es kann durch die Arretierung jedoch ebenfalls gewährleistet werden, dass das Raupenlaufwerk unter dem Gewicht der zu transportierenden Last aus der Transportposition in die Lagerposition schnappt, wodurch eine Verletzungsgefahr für die Bedienperson und eine Zerstörungsgefahr für die zu transportierende Last entstünde.

In einer Ausgestaltung der Erfindung ist das Raupenlaufwerk in der Transportposition in einem Winkel zum Gestell verlaufend angeordnet und in der Lagerposition im Wesentlichen parallel zum Gestell verlaufend angeordnet. In weiterer Ausgestaltung der Erfindung liegt der Winkel in der Transportposition zwischen 10° und 80° und vorzugsweise zwischen 25° und 35°. Der Winkel ergibt sich aus der Differenz von Steigung der Treppe und Kippwinkel der Transportvorrichtung, wobei der Winkel auch als Näherungswert angenommen werden kann. So kann das Raupenlaufwerk durch Variation des Kippwinkels der Transportvorrichtung mit der Fortbewegungsfläche in Kontakt gebracht werden. Vorzugsweise ist der Winkel in einer Größenordnung gewählt, in der durch das Verkippen der Transportvorrichtung der Schwerpunkt der zu transportierenden Last über der Räderachse liegt beziehungsweise geringfügig in Richtung der die Transportvorrichtung benutzenden Person verschoben ist.

In einer Ausgestaltung der Erfindung ist der Winkel zwischen Gestell und Raupenlaufwerk einstellbar. Die Einstellung kann manuell und/oder automatisch erfolgen. Dadurch kann die Position des Raupenlaufwerks zur Verbesserung der Ergonomie der Transportvorrichtung an unterschiedliche Steigungen beziehungsweise Böschungswinkeln von unterschiedlichen Treppen angepasst werden.

In einer Ausgestaltung der Erfindung weist die Transportvorrichtung sowohl paarweise Räder als auch wenigstens ein Raupenlaufwerk auf, vorzugsweise zwei Raupenlaufwerke. Vorzugsweise sind die paarweisen Räder immer in Benutzung, wenn die Transportvorrichtung verwendet wird, im Unterschied dazu das Raupenlaufwerk jedoch nur dann, wenn eine Treppe oder dergleichen zu überwinden oder die Transportvorrichtung sicher abzustellen ist. Dadurch werden das Laufband, die Kette und/oder der Riemen der Laufband-, Ketten- und/oder Riemen-Anordnung geschont, da sie einem geringeren Verschleiß unterliegen.

In einer Ausgestaltung der Erfindung sind die Räder und das Raupenlaufwerk wenigstens in der Transportposition des Raupenlaufwerks so am Gestell angeordnet, dass jeweils ein eine Standebene der Transportvorrichtung berührender Abschnitt des Raupenlaufwerks im Wesentlichen tangential zu einem die Standebene der Transportvorrichtung berührenden Abschnitt wenigstens eines der Räder ausgerichtet ist. Dadurch wird die Berührfläche der Fortbewegungs-Vorrichtung mit der Fortbewegungsebene weiter vergrößert.

In einer Ausgestaltung der Erfindung ist das Laufband, die Kette und/oder der Riemen des wenigstens einen Raupenlaufwerks über wenigstens zwei voneinander beabstandete, in einer Ebene liegend angeordnete und etwa gleich großen Führungsräder geführt. In weiterer Ausgestaltung der Erfindung liegend mehrere Laufräder zwischen den Führungsrädern in derselben Ebene wie die Führungsräder. Die Führungsräder sind vorzugsweise als Scheiben ausgebildet. Bei der Verwendung eines Laufbandes oder eines Riemens sind die Scheiben vorzugsweise mit einer am Umfang der Scheibe umlaufenden Nut versehen. Bei der Verwendung einer Kette können die Scheiben auch ritzelartig ausgebildet sein. Bei der Verwendung von Zahnriemen ist es darüber hinaus denkbar, den Nutengrund mit Ausnehmungen für den Eingriff der Zahnriemenzähne vorzusehen. Mittels der Laufräder wird das Laufband, die Kette und/oder der Riemen bei der Fortbewegung mittels des Raupenlaufwerks auf der Fortbewegungsebene gehalten, so dass eine Lauffläche mit möglichst großer beziehungsweise langer Auflage entsteht.

In einer Ausgestaltung der Erfindung sind das Laufband, die Kette und/oder der Riemen mittels einer am Raupenlaufwerk vorgesehenen Spannvorrichtung spannbar. So kann beispielsweise die Laufband-, Ketten- und/oder Riemen-Anordnung dem Untergrund angepasst werden, auf dem die Transportvorrichtung fortbewegt werden soll. Aber auch Ermüdungserscheinungen von Laufband, Kette und/oder Riemen können in einem gewissen Rahmen ausgeglichen werden. Es ist möglich, die Spannvorrichtung mit einem Energiespeicher zu versehen, beispielsweise einer Feder, so dass Laufband, Kette und/oder Riemen kontinuierlich gespannt werden. Mittels der Spannvorrichtung kann auch das Wechseln eines Laufbandes, einer Kette und/oder eines Zahnriemens vereinfacht werden.

In einer Ausgestaltung der Erfindung ist das Raupenlaufwerk gedämpft beziehungsweise gefedert an der Transportvorrichtung angeordnet, vorzugsweise mittels einer Feder. Die Feder kann als Gasfeder, wenigstens abschnittsweise zylindrisch geformte Feder oder auch als wenigstens abschnittsweise spiralförmig geformte Feder ausgebildet sein. Auch eine Kombination verschiedener Federtypen und -arten ist möglich. Generell ist auch jeder Energiespeicher einsetzbar, der eine Dämpfung beziehungsweise Abfederung von Schwingungen und/oder Stößen erlaubt.

In einer Ausgestaltung der Erfindung sind zwei Laufband-, Ketten- und/oder Riemen-Anordnungen zur Bildung des Raupenlaufwerks an der Transportvorrichtung angeordnet. Obwohl eine Laufband-, Ketten- und/oder Riemen-Anordnung mit ausreichender Breite im Mittelbereich der Transportvorrichtung ausreichend stabilisierende Wirkung auf die Transportvorrichtung ausübt, ist es kostengünstiger, einfacher und durch eine geringere Masse besser, die Laufband-, Ketten- und/oder Riemen-Anordnung paarweise vorzusehen. Vorzugsweise sind die Laufband-, Ketten- und/oder Riemen-Anordnungen paarweise in gegenüberliegenden Seitenbereichen des Gestells angeordnet.

In einer Ausgestaltung der Erfindung sind die zwei Laufband-, Ketten- und/oder Riemen-Anordnungen des Raupenlaufwerks im Wesentlichen synchronisierbar, vorzugsweise mittels einer Synchronisationsvorrichtung. Die Synchronisation kann beispielsweise mittels eines gemeinsamen Achsstabes, eines Getriebes oder dergleichen vorgenommen werden. Durch die Synchronisation sind die Umlaufgeschwindigkeiten des Laufbandes, der Kette und/oder des Riemens gleich groß und die übertragbare Kraft einer Bedienperson kann gleichmäßiger auf die Fortbewegungsebene übertragen werden. In weiterer Ausgestaltung der Erfindung sind die Laufräder zweier Laufband-, Ketten- und/oder Riemen-Anordnungen so in diesen angeordnet, dass Achsen der Laufräder der einen Laufband-, Ketten- und/oder Riemen-Anordnung auf zwischen den Laufrädern beziehungsweise zwischen Laufrädern und Führungsrädern gebildete Zwischenräume weisend ausgerichtet sind.

In einer Ausgestaltung der Erfindung ist die Fortbewegungs-Vorrichtung bremsbar und/oder blockierbar. Dadurch kann die Transportvorrichtung beispielsweise auch auf einer Fortbewegungsebene stehen bleiben, ohne dass eine Bedienperson die Transportvorrichtung sichern muss. Dies ist vorteilhaft, wenn der Bedienperson die Kraft ausgeht oder die zu transportierende Last verrutscht ist. Die Bremse kann in jeder erdenklichen und sinnvollen Weise ausgebildet werden, was auch für die Blockiervorrichtung gilt. In weiterer Ausgestaltung kann ein Elektroantrieb für die Transportvorrichtung bzw. das Raupenlaufwerk vorgesehen sein mit einem wiederaufladbaren Akkumulator odgl. als Energiequelle.

In einer Ausgestaltung der Erfindung sind das Raupenlaufwerk und/oder dessen Teile, die Haltemittel und/oder die Räder werkzeuglos montierbar. Dazu können die beschriebenen Teile beispielsweise steckbar, klemmbar oder dergleichen ausgebildet sein, beispielsweise mittels eines Schnellverschlusses. Dadurch, dass zur Montage kein Werkzeug verwendet werden muss, ist die Montage deutlich vereinfacht und ein eventuell benötigter Umbau der Transportvorrichtung kann ohne nennenswerten Aufwand vollzogen werden. Auch ist das Lagern der Transportvorrichtung bedeutend vereinfacht.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Seitenansicht einer ersten Ausführungsform der erfindungsgemäßen Transportvorrichtung, bei der sich das Raupenlaufwerk in der Lagerposition befindet,
- Fig. 2: eine Seitenansicht der Transportvorrichtung gemäß Fig.1, bei der sich das Raupenlaufwerk in der Transportposition befindet,
- Fig. 3: eine Seitenansicht einer zweiten Ausführungsform der erfindungsgemäßen Transportvorrichtung, bei der sich das Raupenlaufwerk in der Lagerposition befindet,
- Fig. 4: eine Seitenansicht der Transportvorrichtung gemäß Fig.3, bei der sich das Raupenlaufwerk in der Transportposition befindet,
- Fig. 5: eine Seiten-Detailansicht einer dritten Ausführungsform der erfindungsgemäßen Transportvorrichtung, bei der sich das Raupenlaufwerk in der Transportposition befindet,
- Fig. 6: eine Rückansicht der erfindungsgemäßen Transportvorrichtung,
- Fig. 7: eine Seitenansicht der Transportvorrichtung gemäß Fig.5, bei der sich das Raupenlaufwerk in der Transportposition befindet und die Transportvorrichtung gekippt ist, sowie
- Fig. 8: eine Seitenansicht der Transportvorrichtung gemäß Fig.1 in Verwendung an einer Treppe.

### Detaillierte Beschreibung der Zeichnungen

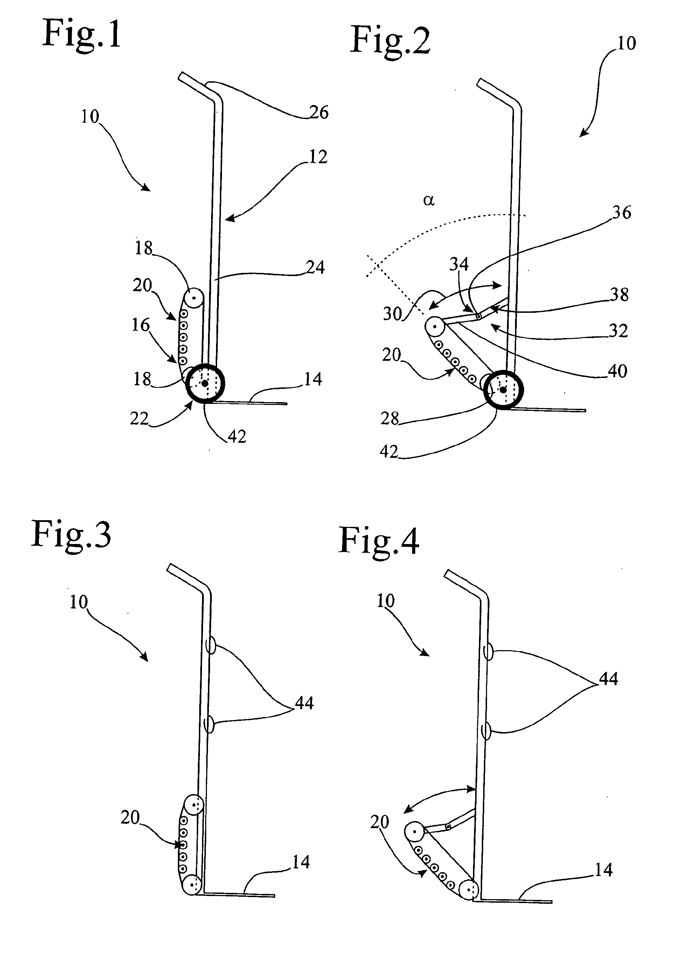

Die in Fig.1 dargestellte Transportvorrichtung 10 weist ein Gestell 12, ein Haltemittel 14 sowie eine Fortbewegungs-Vorrichtung 16 auf und ist nach Art einer Sackkarre ausgebildet. Die Fortbewegungs-Vorrichtung 16 wird gebildet aus Rädern 18 sowie wenigstens einem Raupenlaufwerk 20 und ist in einem unteren Endbereich 22 des Gestells 12 mit dem Gestell 12 schwenkbar und drehbar verbunden. Das Raupenlaufwerk 20 befindet sich gemäß Fig.1 in seiner Lagerposition, in der es im Wesentlichen parallel zum Gestell 12 ausgerichtet ist.

In der Lagerposition des Raupenlaufwerks 20 kann die Transportvorrichtung 10 wie eine bekannte Sackkarre verwendet werden. Ist das Raupenlaufwerk 20 in seine Transportposition 10 verschwenkt, kann die Transportvorrichtung 10 eine Last transportierend erschütterungsfrei und mit geringem und gleichmäßigem Kraftaufwand über Treppenstufen geführt werden, wie im Nachfolgenden noch verdeutlicht wird.

Das Gestell 12 weist ausgehend vom Endbereich 22 einen Hebelbereich 24 sowie einen daran anschließenden Hangriffbereich 26 auf. Der Hebelbereich 24 sowie der Handgriffbereich 26 sind aus rohrartigem Material gefertigt. Die Haltemittel 14 sind aus einem plattenartigen Material gefertigt und können zur Versteifung beispielsweise mit nicht dargestellten Prägungen oder dergleichen versehen sein.

Das Raupenlaufwerk 20 kann, wie in Fig.2 dargestellt, mittels einer Schwenkbewegung, die parallel zu Pfeil 30 verläuft, um eine Achse 28 von der Lagerposition in eine Transportposition überführt werden. Um das Raupenlaufwerk 20 in seiner Transportposition arretieren zu können, sind an der Transportvorrichtung 10 Arretiervorrichtungen 32 vorgesehen, die gemäß Fig.2 knieartig ausgebildet sind. Mittels eines Kniegelenks 34 sowie einer Schraube 36, die die beiden Schenkel 38, 40 miteinander verbindet, kann der Winkel α zwischen dem Gestell 12 und dem Raupenlaufwerk 20 variabel eingestellt werden, wobei er vorzugsweise zwischen 25° und 45° liegt.

Die Transportvorrichtung 10 der Fig.1 und Fig.2 weist jeweils sowohl wenigstens ein Raupenlaufwerk 20 sowie Bodenräder 42 auf, wobei die Bodenräder 42 auf bekannte Weise am Gestell 12 angeordnet sind.

Im Unterschied dazu weist die Ausführungsform der Transportvorrichtung 10 gemäß der Fig.3 und Fig.4 lediglich wenigstens ein Raupenlaufwerk 20 auf, das in Funktion und Ausgestaltung dem der Fig.1 und Fig.2 entspricht. Weiterhin sind an der Transportvorrichtung 10 in Fig.3 und Fig.4 ösenartige Hakenlaschen 44 vorgesehen, mit denen eine nicht dargestellte zu transportierende Last, die auf dem Haltemittel 14 aufliegt, an der Transportvorrichtung 10 beispielsweise gegen Verrutschen gesichert werden kann.

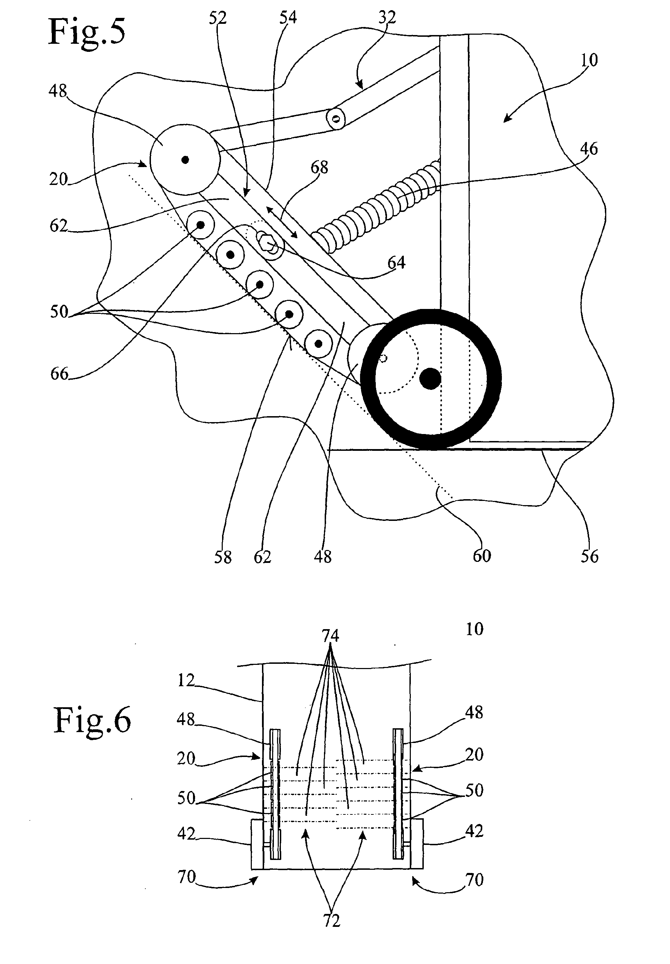

In der Detail-Seitenansicht der Transportvorrichtung 10 gemäß Fig.5 befindet sich das Raupenlaufwerk 20 in seiner Transportposition. Neben der Arretiervorrichtung 32 ist zwischen dem Gestell 12 und dem Raupenlaufwerk 20 eine Feder 46 angeordnet. Mittels der Feder 46 werden Stöße abgedämpft, die auf das Raupenlaufwerk 20 wirken und nicht auf die zu transportierende Last übertragen werden sollen.

Der Fig.5 sind weiterhin Details des Aufbaus des Raupenlaufwerks 20 zu entnehmen. Neben zwei Führungsrädern 48 weist das Raupenlaufwerk 20 noch Laufräder 50, eine Spannvorrichtung 52 sowie ein die Führungsräder 48 und die Laufräder 50 umlaufendes Band 54 auf. Das Band 50 kann nach Art eines Riemens, einer Kette oder dergleichen ausgebildet sein, wobei die Führungsräder 48 der Ausgestaltung des Bandes 50 entsprechend anzupassen sind.

Die Laufräder 50 sind an einer der Standebene 56 der Transportvorrichtung 10 zugewandten Seite am Raupenlaufwerk 20 angeordnet und bilden eine Lauffläche 58 des Raupenlaufwerks 20. Die Lauffläche 58 des Raupenlaufwerks 20 ist so ausgerichtet, dass sie im Wesentlichen deckungsgleich mit einem Abschnitt einer Tangente 60 wenigstens eines Bodenrades 42 verläuft.

Die Spannvorrichtung 52 weist wenigstens zwei Stäbe 62 auf, die mit jeweils einer ihrer Seiten aneinander anliegen und mittels einer Schraubverbindung 64 an jeweils einem Endbereich der Stäbe 62 miteinander verbunden sind. Wenigstens einer der Stäbe 62 weist in seinem Verbindungsendbereich ein Langloch 66 auf, in das die Schraubverbindung 64 eingreift und durch das die Stäbe 62 bei eingesetzter Schraubverbindung 64 gegeneinander parallel zu Pfeil 68 verschiebbar sind. Die übrigen Endbereiche der Stäbe 62 stehen jeweils mit einem der Führungsräder 48 in Eingriff, so dass sich die Führungsräder 48 beim Verschieben der Stäbe 62 gegeneinander entsprechend der Verschiebebewegung aufeinander zu bewegen oder voneinander entfernen, wodurch das Band 54 entspannt oder gespannt werden kann.

Aus der Rückansicht der Fig.6 ist zu entnehmen, dass an der Transportvorrichtung 10 jeweils ein Bodenrad 42 sowie ein Raupenlaufwerk 20 in den Seitenbereichen 70 des Gestells 12 der Transportvorrichtung 10 angeordnet sind. Dadurch ist die Stabilität der Transportvorrichtung 10 bei der Fortbewegung der Transportvorrichtung 10 deutlich erhöht.

Fig.6 ist weiterhin zu entnehmen, dass die Laufräder 50 der Raupenlaufwerke 20 so zwischen den Führungsrädern 48 angeordnet sind, dass die Achsen 72 der Laufräder 50 gegenüberliegender Raupenlaufwerke 20 jeweils in Zwischenräume 74 weisend ausgerichtet sind, die von jeweils zwei direkt benachbarten Laufrädern 50 eines Raupenlaufwerks 20 gebildet werden.

Es ist möglich, die Raupenlaufwerke 20 mittels einer Synchronisationsvorrichtung zu synchronisieren, etwa mit einem Verbindungsstab. Dieser kann beispielsweise an den gegenüberliegenden Führungsrädern gegenüberliegender Raupenlaufwerke befestigt sein. Durch die Synchronisation der Raupenlaufwerke kann die Kraft, die eine Bedienperson zur Fortbewegung der Transportvorrichtung in die Transportvorrichtung einleitet, gleichmäßig auf die Raupenlaufwerke verteilt werden.

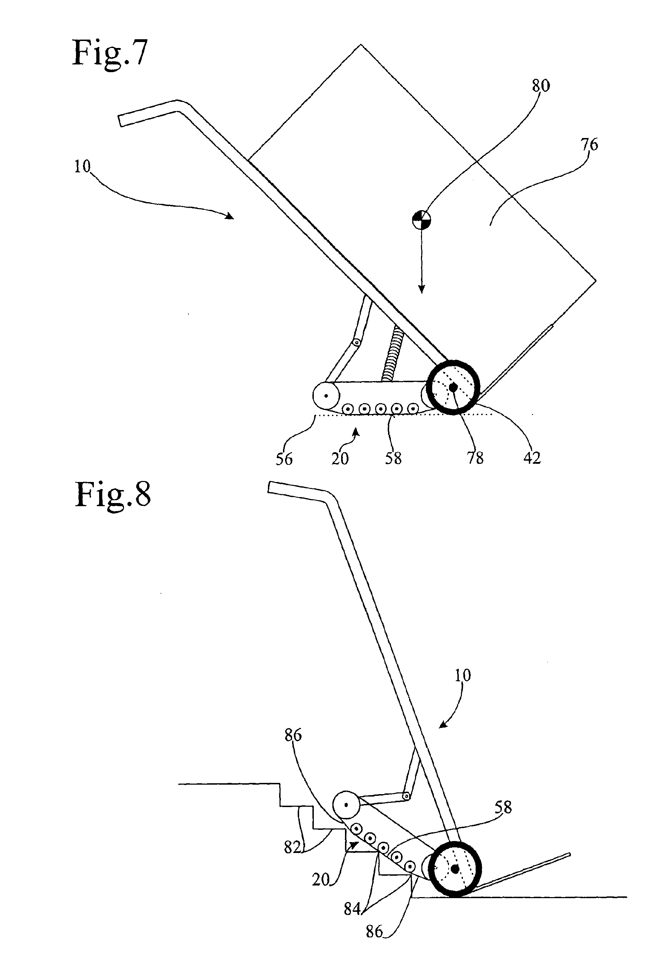

Das Verschwenken des Raupenlaufwerks 20 in die Transportposition zeigt sich besonders vorteilhaft bei der Verwendung der Transportvorrichtung 10 wie in Fig.7 und Fig.8 dargestellt. In Fig.7 ist die Transportvorrichtung 10 mit einer Last 76 beladen. Die Transportvorrichtung 10 ist um eine Achse 78 gekippt, so dass sowohl die Bodenräder 42 als auch die Lauffläche 58 des Raupenlaufwerks 20 auf der Standebene 56 aufliegen. Durch das Kippen der Transportvorrichtung 10 wurde der Schwerpunkt 80 der Last 76 über der Kontaktfläche von Raupenlaufwerk 20 und Bodenrad 42 mit der Standebene 56 positioniert, so dass die Transportvorrichtung 10 in dieser gekippten Position sicher steht. Auch kann die Transportvorrichtung 20 in der gekippten Position fortbewegt werden, ohne dass von der Bedienperson Kraft zur Aufrechterhaltung der Kipplage der Transportvorrichtung 20 aufgebracht werden muss.

In Fig.8 ist dargestellt, wie die Transportvorrichtung 10 über Treppenstufen 82 bewegt werden kann. Dabei ist das Raupenlaufwerk 20 vorzugsweise so ausgebildet, dass es wenigstens drei Treppenstufenkanten 84 überspannt. Dadurch berühren immer wenigstens zwei Bereiche der Lauffläche 58 des Raupenlaufwerks 30 die Treppenstufenkanten 84. Durch das Raupenlaufwerk 20 entsteht eine Art Rampe auf den Treppenstufen 82, über die die Transportvorrichtung 10 annähernd erschütterungsfrei fortbewegt werden kann.

Berührt die Lauffläche 58 eines kürzeren Raupenlaufwerks 20 nur eine Treppenstufenkante 84, kann es vorkommen, dass die Transportvorrichtung 10 geringfügig verkippt. Um das Bewegen der Transportvorrichtung 10 auf die nächste Treppenstufenkante 84 zu beziehungsweise deren Überwindung zu vereinfachen, sind an dem Raupenlaufwerk 20 Anlaufschrägen 86 vorgesehen.

## Patentansprüche

1. Transportvorrichtung, insbesondere Sackkarren oder Handkarren, mit einem Haltemittel (14) aufweisenden Gestell (12) und einer wenigstens zwei Räder (18) aufweisenden Fortbewegungs-Vorrichtung (16), wobei die Fortbewegungs-Vorrichtung (16) im unteren Endbereich (22) des Gestells (12) angeordnet und so ausgebildet ist, dass Räder (18, 42) jeweils paarweise an gegenüberliegenden Seiten (70) des Gestells (12) am Gestell (12) angeordnet sind, **dadurch gekennzeichnet, dass** die Fortbewegungs-Vorrichtung (16) als wenigstens ein Raupenlaufwerk (20) ausgebildet ist, das eine umlaufende Laufband-, Ketten- und/oder Riemen-Anordnung aufweist, die am Gestell (12) von einer Transportposition in eine Lagerposition überführbar ist.

2. Transportvorrichtung nach Anspruch 1, **dadurch gekennzeichnet, dass** das Raupenlaufwerk (20) mittels einer Schwenkbewegung (30) von der Transportposition in die Lagerposition überführbar ist, vorzugsweise nur mittels Schwenken.

3. Transportvorrichtung nach einem der Ansprüche 1 oder 2, **dadurch gekennzeichnet, dass** das Raupenlaufwerk (20) in der Transportposition und/oder der Lagerposition arretierbar ist.

4. Transportvorrichtung nach einem der vorstehenden Ansprüche, **dadurch gekennzeichnet, dass** das Raupenlaufwerk (20) in der Transportposition in einem Winkel zum Gestell (12) verläuft und in der Lagerposition im Wesentlichen parallel zum Gestell (12) verläuft.

5. Transportvorrichtung nach Anspruch 4, **dadurch gekennzeichnet, dass** der Winkel in einem Bereich zwischen 10° und 80° liegt und vorzugsweise 25° bis 35° aufweist.

6. Transportvorrichtung nach Anspruch 4 oder 5, **dadurch gekennzeichnet, dass** der Winkel zwischen Gestell (12) und Raupenlaufwerk (20) einstellbar ist.

7. Transportvorrichtung nach einem der vorstehenden Ansprüche, **dadurch gekennzeichnet, dass** die Fortbewegungs-Anordnung (16) sowohl paarweise Räder (42) als auch wenigstens ein Raupenlaufwerk (20) aufweist, vorzugsweise zwei Raupenlaufwerke (20).

8. Transportvorrichtung nach Anspruch 7, **dadurch gekennzeichnet, dass** die Räder (42) und das Raupenlaufwerk (20) wenigstens in der Transportposition des Raupenlaufwerks (20) so am Gestell (12) angeordnet sind, dass jeweils ein eine Standebene (56) der Transportvorrichtung berührender Abschnitt des Raupenlaufwerks (20) im Wesentlichen tangential zu einem die Standebene (56) der Transportvorrichtung (10) berührenden Abschnitt wenigstens eines der Räder (42) ausgerichtet ist.

9. Transportvorrichtung nach einem der vorstehenden Ansprüche, **dadurch gekennzeichnet, dass** das Laufband, die Kette und/oder der Riemen (54) des wenigstens einen Raupenlaufwerks (20) über wenigstens zwei voneinander beabstandete, in einer Ebene liegend angeordnete und etwa gleich große Führungsräder (48) geführt ist.

10. Transportvorrichtung nach Anspruch 9, **dadurch gekennzeichnet, dass** zwischen den Führungsrädern (48) in derselben Ebene wie die Führungsräder (48) liegend ein oder mehrere Laufräder (50) angeordnet sind.

11. Transportvorrichtung nach einem der vorstehenden Ansprüche, **dadurch gekennzeichnet, dass** das Laufband, die Kette und/oder der Riemen (54) mittels einer am Raupenlaufwerk (20) vorgesehenen Spannvorrichtung (52) spannbar sind.

12. Transportvorrichtung nach einem der vorstehenden Ansprüche, **dadurch gekennzeichnet, dass** das Raupenlaufwerk (20) gedämpft an der Transportvorrichtung (10) angeordnet ist, vorzugsweise mittels einer Feder (46).

13. Transportvorrichtung nach einem der vorstehenden Ansprüche, **dadurch gekennzeichnet, dass** zwei Laufband-, Ketten- und/oder Riemen-Anordnungen zur Bildung des Raupenlaufwerks (20) an der Transportvorrichtung (10) angeordnet sind.

14. Transportvorrichtung nach Anspruch 13, **dadurch gekennzeichnet, dass** die zwei Laufband-, Ketten- und/oder Riemen-Anordnungen des Raupenlaufwerks (20) im Wesentlichen synchronisierbar sind, vorzugsweise mittels einer Synchronisationsvorrichtung (72).

15. Transportvorrichtung nach Anspruch 13 oder 14, **dadurch gekennzeichnet, dass** die Laufräder (50) zweier Laufband-, Ketten- und/oder Riemen-Anordnungen so in diesen angeordnet sind, dass Achsen der Laufräder (50) der einen Laufband-, Ketten- und/oder Riemen-Anordnung auf zwischen den Laufrädern (50) bzw. zwischen Laufrädern (50) und Führungsrädern (48) gebildete Zwischenräume weisend ausgerichtet sind, wobei vorzugsweise die Achsen versetzt zueinander sind.

16. Transportvorrichtung nach einem der vorstehenden Ansprüche, **dadurch gekennzeichnet, dass** eine Fortbewegungs-Vorrichtungen (16) bremsbar und/oder blockierbar ist.

17. Transportvorrichtung nach einem der vorstehenden Ansprüche, **dadurch gekennzeichnet, dass** das Raupenlaufwerk (20) und/oder dessen Teile (32, 48, 50, 52, 54), die Haltemittel (14) und/oder die Räder (18, 42) werkzeuglos montierbar sind.

18. Transportvorrichtung nach einem der vorstehenden Ansprüche, **dadurch gekennzeichnet, dass** an der Transportvorrichtung (10) Befestigungsvorrichtungen (44) als Haltemittel angeordnet sind, vorzugsweise Ösen oder Hakenlaschen, die insbesondere schwenkbar sind.
